# FASCICULE DE BREVET EUROPEEN

(11) **EP 2 983 856 B1**
(45) Date de publication et mention de la délivrance du brevet: **05.04.2017**
(21) Numéro de dépôt: 14715969.3
(22) Date de dépôt: 09.04.2014
(51) Int. Cl.: B23K 1/00, B23K 1/005, B23K 1/19, B23K 26/24, B23K 26/32, B23K 26/20

(54) **PROCÉDÉ D'ÉTABLISSEMENT D'UNE LIAISON PERMANENTE ENTRE UN ALLIAGE FERREUX ET UN ALUMINIUM OU UN ALLIAGE D'ALUMINIUM**
VERFAHREN ZUR HERSTELLUNG EINER PERMANENTEN BINDUNG ZWISCHEN EINER EISENLEGIERUNG UND EINEM ALUMINIUM ODER EINER ALUMINIUMLEGIERUNG
METHOD FOR ESTABLISHING A PERMANENT BOND BETWEEN A FERROUS ALLOY AND AN ALUMINIUM OR AN ALUMINIUM ALLOY

(30) Priorité: 12.04.2013 FR 1300862
(43) Date de publication de la demande: 17.02.2016
(73) Titulaire: Thales, 92400 Courbevoie (FR)
(72) Inventeur: PEREIRA, Alberto, F-38430 Moirans (FR); FAVRE-VERAND, Thierry, F-38430 Moirans (FR)
(74) Mandataire: Derval, Estelle
(86) Numéro de dépôt international: PCT/EP2014/057208
(87) Numéro de publication internationale: WO 2014/167027

(56) Documents cités:
- JP-A- 2004 174 529
- JP-A- 2005 169 418
- JP-A- 2006 175 503
- JP-A- 2010 094 701
- JP-A- 2012 166 270
- US-A1- 2007 007 254

## Description

Le domaine de l'invention est celui des assemblages c'est-à-dire de l'établissement de liaison permanentes entre des matériaux présentant une mauvaise compatibilité métallurgique lors du passage à l'état liquide, en particulier les alliages ferreux et l'aluminium ou les alliages d'aluminium.

L'invention définit en particulier un procédé d'établissement d'une liaison permanente entre une première pièce en alliage ferreux et une deuxième pièce en aluminium ou en alliage d'aluminium suivant le préambule de la revendication 1 (voir, par exemple, JP2005/169418 A).

On connait un procédé d'établissement d'une liaison permanente entre une première pièce en alliage ferreux et une deuxième pièce en aluminium ou en alliage d'aluminium, comprenant :
- une étape d'empilement de la première pièce et de la deuxième pièce,
- une étape de chauffage dans laquelle la chaleur produite par une source de chaleur est transmise à la première pièce à travers la deuxième pièce en aluminium ou en alliage d'aluminium, l'étape de chauffage étant réalisée de façon à provoquer l'établissement de la liaison entre la première pièce et la deuxième pièce par fusion d'au moins une pièce formant l'empilement.

Toutefois, ce procédé présente l'inconvénient de nécessiter beaucoup d'énergie thermique pour chauffer l'alliage ferreux. Par ailleurs, ce procédé présente l'inconvénient d'engendrer des déformations importantes de la pièce en aluminium ou en alliage d'aluminium.

Le but de l'invention est de remédier aux inconvénients précités.

A cet effet l'invention a pour objet un procédé d'établissement d'une liaison permanente entre une première pièce en alliage ferreux et une deuxième pièce en aluminium ou en alliage d'aluminium tel que défini dans la revendication 1, et comprenant :
- une étape d'empilement de la première pièce et de la deuxième pièce,
- une étape de chauffage dans laquelle la chaleur produite par une source de chaleur est transmise à la deuxième pièce à travers la première pièce, l'étape de chauffage étant réalisée de façon à provoquer l'établissement de la liaison entre la première pièce et la deuxième pièce par fusion d'au moins une pièce formant l'empilement.

Autrement dit, la deuxième pièce est chauffée par transparence à travers la première pièce.

Ce procédé permet d'économiser de l'énergie du fait qu'un alliage ferreux absorbe et transmet mieux la chaleur que l'aluminium qui est très réfléchissant. Le chauffage de l'aluminium à travers l'alliage ferreux permet d'éviter la déformation de l'aluminium du fait du surplus d'énergie thermique qui serait nécessaire en chauffant l'alliage ferreux par transparence à travers l'aluminium. Il rend également le procédé plus facilement répétable.

La liaison obtenue par ce procédé peut être de type soudure, ou mouillage réactif par exemple.

Dans un mode de réalisation préféré de l'invention, lors de l'étape d'empilement, une troisième pièce en un matériau d'apport métallique, destinée à établir la liaison entre la première pièce et la deuxième pièce, est interposée entre la première pièce et la deuxième pièce, et lors de l'étape de chauffage, la chaleur produite par la source de chaleur est transmise à la deuxième pièce et à la troisième pièce à travers la première pièce, la troisième pièce étant choisie et l'étape de chauffage étant réalisée de façon à former la liaison permanente entre la première pièce et la deuxième pièce par soudo-brasage.

Avec ce procédé une liaison de type soudure est obtenue à l'interface entre la deuxième pièce et le matériau d'apport et une liaison de type brasure est obtenue entre la première pièce et le matériau d'apport.

Il faut savoir que la mauvaise compatibilité métallurgique ainsi que la grande différence en dilatation thermique et en module d'élasticité entre ces matériaux rend difficile l'obtention d'un assemblage solide mécaniquement et à fortiori étanche au vide. La grande différence de propriétés mécaniques engendre des contraintes thermiques importantes et donc un risque important de déformation, de cassure et de tensions résiduelles. La mauvaise compatibilité métallurgique entre ces matériaux et notamment la différence importante entre leurs points de fusion respectifs est à l'origine de couches épaisses de composés intermétalliques qui sont très dures et fragiles et très préjudiciables à la bonne tenue mécanique de l'assemblage et à fortiori à son étanchéité au vide.

Le chauffage de l'aluminium et du matériau d'apport au travers de l'alliage ferreux permet d'améliorer la tenue mécanique et l'étanchéité au vide de l'assemblage notamment en limitant l'épaisseur des couches d'intermétalliques par rapport à celles obtenues au moyen de procédés dans lesquels la liaison entre l'alliage ferreux et l'aluminium ou l'alliage d'aluminium est établie par soudage, brasage ou mouillage réactif.

Le fait de mettre en oeuvre le procédé selon le mode de réalisation exposé ci-dessus permet des assemblages présentant un taux de fuite inférieur à 1.10⁻¹⁰ mbar.l/s (1 bar = 10⁵ Pa) et une tenue à l'arrachement de 2500 daN à une température d'environ 20°C et à pression atmosphérique ce qui n'est pas possible lorsque la liaison est réalisée soudage, brasage ou mouillage réactif. La demanderesse a obtenu des taux de fuite compris entre 1. 10⁻¹² et 9. 10⁻¹¹ mbar.l/s à une température d'environ 20°C et à pression atmosphérique.

L'utilisation d'une troisième pièce prise en sandwich entre les première et deuxième pièces pour établir toute la liaison entre la première pièce et la deuxième pièce permet de s'assurer que l'assemblage soit réalisé par soudo-brasage et d'assurer l'homogénéité (c'est-à-dire de limiter la porosité) du cordon de liaison entre les pièces. Le cordon obtenu est uniforme du point de vue du composé métallurgique et continu.

Par ailleurs, ce procédé, du fait qu'il limite la porosité des couches liant ces deux pièces, permet d'éviter que des particules ne traversent l'assemblage ou que des particules ne se détachent de la liaison et (en particulier du côté de la brasure) et ne traversent l'assemblage. Cette caractéristique est stratégique lorsque l'assemblage est destiné à former une partie d'un tube à vide qui ne doit en aucun cas être contaminé par des particules extérieures.

Le fait de placer la troisième pièce en sandwich entre les deux pièces à assembler permet de limiter la taille de l'assemblage obtenu et évite l'encombrement sur les côtés de la jonction. Cette configuration permet de limiter l'énergie nécessaire à la fusion du matériau d'apport et à la formation de la liaison puisque la partie du matériau d'apport destinée à former la liaison entre la première pièce et la deuxième pièce se trouve déjà à l'interface entre les deux pièces à assembler et au droit de l'apport d'énergie thermique. La présence de la pièce matériau d'apport avant soudage à l'interface entre les deux pièces permet également de garantir l'établissement de la liaison et de limiter les porosités dans cette liaison. Le matériau d'apport en fusion n'a pas à migrer dans l'interstice entre les deux pièces pour établir la liaison, la migration ne garantissant pas le remplissage de l'interstice. Cette configuration permet également de garantir le bon positionnement de la liaison.

La transmission de la chaleur au travers de l'acier permet de réaliser l'assemblage même lorsque la troisième pièce est peu accessible. Cette caractéristique est importante notamment lorsque la liaison à réaliser forme une boucle fermée. Elle évite de devoir tourner autour de la pièce pour réaliser l'assemblage des pièces. L'encombrement lié à la mise en oeuvre du procédé selon l'invention est minimisé du fait que la liaison peut être réalisée en irradiant la pièce d'un seul côté au droit de la liaison à réaliser.

Avantageusement, les pièces empilées sont maintenues en contact pendant l'étape de chauffage.

Avantageusement, les pièces empilées sont maintenues en contact sur toute la longueur et/ou sur toute la largeur de la liaison devant être établie pendant l'étape de chauffage.

Avantageusement, un isolant thermique est maintenu en contact avec au moins une pièce prise parmi la première pièce et la deuxième pièce, pendant l'étape de chauffage.

Avantageusement, l'isolant thermique est interposé entre les pièces empilées et un outillage maintenant les pièces empilées en contact de façon à limiter la transmission de la chaleur des pièces empilées vers l'outillage.

Avantageusement, l'isolant thermique est réalisé en silicate de zirconium.

Avantageusement, la liaison présente la forme d'une boucle fermée.

Avantageusement, lors de l'étape de chauffage, la source de chaleur balaye la liaison devant être formée sur plus d'un tour de la liaison en se déplaçant relativement à la liaison dans un seul sens. Le fait de réaliser le chauffage sur plus d'un tour permet d'améliorer l'homogénéité de la température sur l'ensemble de la liaison. Cela permet d'améliorer encore l'étanchéité au gaz de la liaison.

Conformément à l'invention, préalablement à l'étape de chauffage, une étape de préchauffage consistant à préchauffer les pièces empilées au moyen de la source de chaleur de façon à porter les pièces empilées à des températures respectives inférieures à leurs températures de fusion respectives. La même source de chaleur est, conformément à l'invention, utilisée pour l'étape de préchauffage et pour l'étape de chauffage.

Avantageusement, la source de chaleur balaye plus rapidement la liaison à réaliser est effectué plus lentement pendant l'étape de chauffage que pendant l'étape de préchauffage ou balaye la liaison avec une vitesse de balayage égale à la vitesse de balayage la plus lente utilisée pendant l'étape de préchauffage.

Avantageusement, la source de chaleur est un laser, par exemple, un laser yag, un laser à fibre ou une diode laser.

D'autres caractéristiques et avantages de l'invention apparaîtront à la lecture de la description détaillée qui suit, faite à titre d'exemple non limitatif et en référence aux dessins annexés dans lesquels :
- la figure 1 représente un ordinogramme des étapes du procédé selon l'invention,
- la figure 2 représente schématiquement un exemple de mise en oeuvre du procédé selon l'invention pendant une étape de chauffage ou de préchauffage, sur lequel sont représentées, la source de chaleur et une coupe des pièces empilées en contact avec un isolant et comprimées par un outillage,
- la figure 3 représenté schématiquement une coupe selon un plan M, de la situation représentée sur la figure 2,

D'une figure à l'autre, les mêmes éléments sont repérés par les mêmes références.

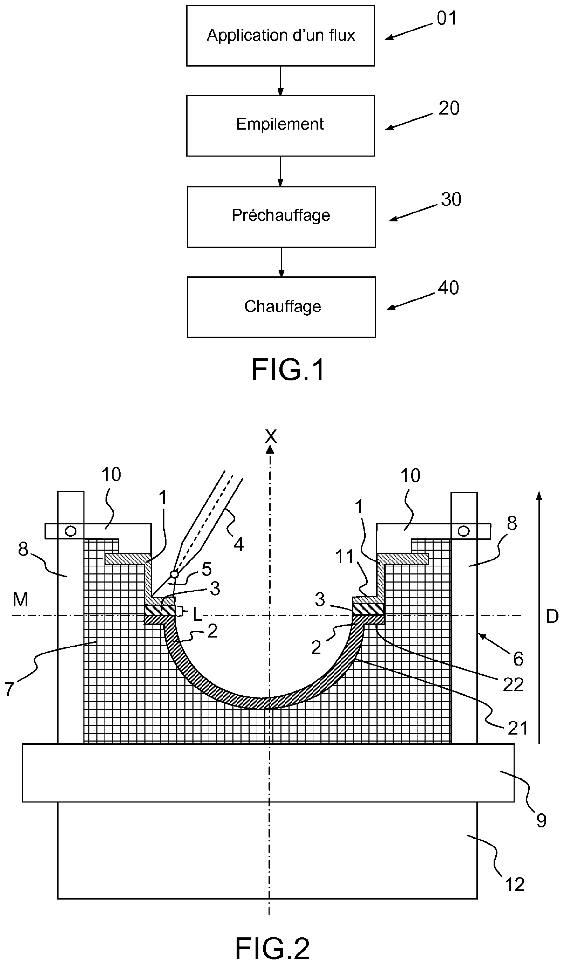

Sur la figure 1, on a représenté un ordinogramme des étapes du procédé selon l'invention.

Le procédé comprend une étape d'empilement 20 d'une pluralité de pièces comprenant une première pièce 1 (représentée sur la figure 2) réalisée en alliage ferreur et une deuxième pièce 2 réalisée en aluminium ou en alliage d'aluminium. La première pièce 1 est réalisée en alliage ferreux, par exemple, en acier ou en acier inoxydable. La deuxième pièce 2 est réalisée en aluminium ou en alliage d'aluminium. La deuxième pièce 2 présente une température de fusion inférieure à la température de fusion de la première pièce 1. Autrement dit, le matériau dans lequel est réalisée la deuxième pièce présente une température de fusion inférieure à celle du matériau dans lequel est réalisée la première pièce.

Cet empilement peut être réalisé avec ou sans matériau d'apport métallique aussi appelé métal d'apport. Avantageusement, lors de l'étape de réalisation de l'empilement, une troisième pièce 3 réalisée en un matériau d'apport, destinée à établir la liaison entre la première pièce 1 et la deuxième pièce 2, est interposée entre la première pièce 1 et la deuxième pièce 2 comme visible sur la figure 2. La troisième pièce est monobloc.

Le matériau d'apport présente une température de fusion inférieure à la température de fusion de la première pièce et de la deuxième pièce. Il présente une moins grande affinité chimique que la deuxième pièce avec la première pièce. Le matériau d'apport métallique est, par exemple, un alliage d'aluminium avec de préférence du silicium. L'alliage d'aluminium peut également être réalisé en cuivre, manganèse ou en zinc. Il peut être réalisé sous forme de fil, de feuillard, de plaque, ou d'anneau. L'anneau peut être de différentes formes, par exemple carrée ou ronde. Il s'agit, en d'autres termes, d'une boucle fermée.

Avantageusement, les faces de la troisième pièce 3 qui font face à la première pièce 1 et respectivement à la deuxième pièce 2 sont complémentaires des faces respectives de la première pièce et de deuxième pièce qui leur font face. Sur la réalisation de la figure 1, ces faces sont planes. Cette caractéristique permet de réaliser une liaison entre la première pièce 1 et la deuxième pièce 2 sur toute la largeur de faces de la troisième pièce 3.

Le procédé comprend une étape de chauffage 40 lors de laquelle la chaleur produite par une source de chaleur 4 est transmise à la deuxième pièce 2 à travers la première pièce 1, l'étape de chauffage 40 est réalisée de façon à assembler la première pièce 1 et la deuxième pièce 2 par fusion d'au moins une des pièces de l'empilement. Autrement dit, lors de l'étape de chauffage, la source de chaleur chauffe la première pièce à une température choisie de façon à provoquer la fusion d'au moins une des pièces et l'établissement de la liaison. La source de chaleur chauffe la première pièce uniquement et la chaleur produite est transmise aux autres pièces. Si la source de chaleur est un laser, le laser irradie uniquement la première pièce. Dans la configuration sans matériau d'apport, la liaison peut être réalisée par soudage ou mouillage réactif ou brasage.

La source de chaleur 4 est, par exemple, un laser comme sur la figure 2, par exemple un laser Nd-YAG, un laser CO₂ ou une diode laser. Une diode laser est de préférence utilisée car les coefficients d'absorption de la chaleur de l'aluminium et du fer sont plus importants à une longueur d'onde inférieure à 1, 06 micromètres à laquelle peut émettre une diode laser. Le laser 4 irradie la première pièce 1 en alliage ferreur au moyen d'un faisceau laser 5.

La source de chaleur pourrait également être une électrode pour un soudage TIG.

Dans la configuration avec matériau d'apport 3, lors de l'étape de chauffage 40, la chaleur produite par la source de chaleur 4 est transmise à la deuxième pièce 2 et à la troisième pièce 3 à travers la première pièce 1, la troisième pièce 3 étant choisie et l'étape de chauffage 40 étant réalisée de façon à former la liaison permanente entre la première pièce et la deuxième pièce par soudo-brasage. Les caractéristiques du matériau d'apport ont été données précédemment. L'étape de chauffage est réalisée de façon à porter la pièce 3 à une température au moins égale à sa température de fusion de façon à la faire fondre mais de façon à porter les première et deuxième pièces 1, 2 à des températures inférieures à leurs températures de fusion respectives.

Avantageusement, les pièces empilées sont maintenues en contact les unes avec les autres pendant l'étape de chauffage 40. Autrement dit, sur la réalisation de la figure 2, chacune des deux pièces 1, 2 est maintenue en contact avec le matériau d'apport 3. Le maintien en pression permet de limiter les porosités entre les deux pièces 1, 2 lors du soudo-brasage, notamment du côté brasure et donc d'améliorer l'étanchéité de l'assemblage obtenu.

Avantageusement, les pièces empilées sont maintenues en contact sur toute la longueur de la liaison L devant être établie et de préférence sur toute la largeur de la liaison devant être établie entre les deux pièces. La longueur et la largeur de la liaison L s'étendent perpendiculairement à la direction D d'empilement des pièces. Lorsque la liaison présente une forme de boucle fermée, la longueur correspond à la circonférence de la boucle. Cela permet encore de limiter les porosités et de limiter au maximum la traversée de l'empilement par des particules.

Le maintien en contact est réalisé au moyen d'un outillage 6 exerçant des efforts dans la même direction et dans le sens opposé de part et d'autre des pièces empilées 1, 2, 3, selon la direction D d'empilement de façon à les maintenir en contact. La pression est avantageusement maintenue tout au long de l'étape de chauffage 40. L'outillage 6 applique avantageusement un effort de compression constant sur les pièces empilées pendant l'étape de chauffage.

Sur la réalisation de la figure 2, l'outillage 6 est un système de brides 8 s'étendant selon la direction de l'empilement D et fixées à un support 9 sur lequel est posé l'empilement et à des traverses 10 en appui sur la face de l'empilement opposée au support 9. La longueur de brides 8 peut être réglée de façon à comprimer l'empilement. Le raccourcissement des brides rapproche le support 9 et les traverses 10 ce qui a pour effet de comprimer l'empilement selon la direction D. Le système de réglage des brides est, par exemple, pneumatique.

Avantageusement, un isolant thermique 7 est maintenu en contact avec au moins une pièce parmi la première pièce 1, la deuxième pièce 2 et la troisième pièce 3 (dans le cas où il y a un matériau d'apport) pendant l'étape de chauffage. Ce maintient est avantageusement assuré pendant toute la durée du chauffage. Cette caractéristique permet d'éviter le refroidissement des pièces lors de l'étape de chauffage et donc l'obtention d'assemblages fragiles.

Sur la réalisation des figures, les faces des première, deuxième et troisième pièces opposées à la source de chaleur 4 sont maintenues en contact avec l'isolant thermique. L'isolant 7 présente avantageusement une forme complémentaire de la face opposée à la source de chaleur 4 des pièces empilées (ou la première et la deuxième pièce lorsqu'il n'y a pas de troisième pièce). Les pièces empilées sont emboitées dans l'isolant 7.

Avantageusement, l'isolant 7 est interposé entre les pièces empilées 1, 2, 3 et l'outillage de façon à limiter la transmission de chaleur des pièces empilées vers l'outillage. Cela permet d'éviter les baisses de température des pièces empilées. Par ailleurs dans ce cas, le maintien en contact de l'isolant thermique 7 avec les pièces est réalisé en même temps que le maintien des pièces en contact. Cela permet d'utiliser un unique outillage pour cette étape.

L'isolant thermique 7 est avantageusement réalisé en céramique. La céramique est avantageusement réalisée silicate de zirconium ZrSiO4, Cette céramique est avantageuse car elle est à la fois isolante et résistante à ces efforts de compression. Elle a par ailleurs une température de fusion de l'ordre de 1660°C, c'est-à-dire supérieure à la température de fusion du matériau d'apport et une conductivité thermique de 3,5W W·m⁻¹·K⁻¹.

Avantageusement, mais non nécessairement, un flux est appliqué dans une étape 01 préalable à l'empilement, sur au moins une pièce parmi la première, la deuxième. Le flux permet d'éviter les oxydes de surface et permet d'obtenir un meilleur mouillage des première et deuxième pièces. Il permet d'obtenir un procédé plus robuste du point de vue de la bonne tenue au vide et du point de vue des taux de fuite des assemblages obtenus. Le flux est par exemple à base de fluorure de potassium et d'aluminium (KF + AlF³).

Avantageusement, mais non nécessairement, un inertage est réalisé pendant l'étape de chauffage et de préférence pendant toute la durée de l'étape de chauffage 40. L'inertage peut, par exemple, être réalisé de manière non limitative à l'Argon, à un mélange Argon et Hélium. L'inertage permet d'éviter l'oxydation et de limiter l'affinité de l'oxygène avec l'aluminium.

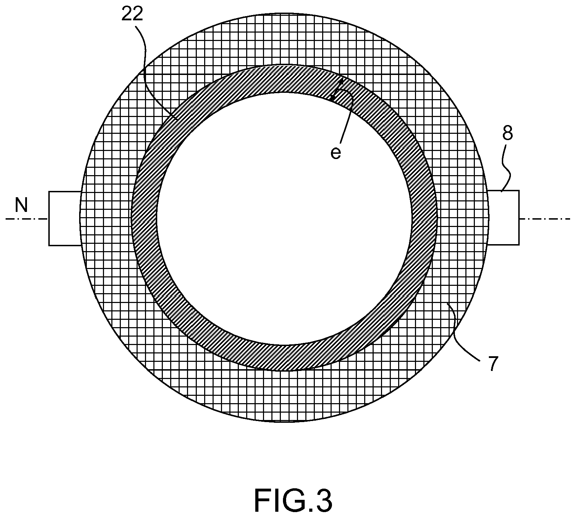

Comme visible sur la figure 3, représentant une coupe de la deuxième pièce 2 selon le plan M visible sur la figure 2, et sur la figure 2, représentant une coupe des éléments intervenant dans la procédé pendant la mise en oeuvre du procédé, le plan de coupe étant le plan N représenté sur la figure 3, la deuxième pièce 2 présente un dôme 21 et une base 22 présentant une forme de couronne. La liaison étanche L doit être établie entre cette base 22 et une partie 11 de la première pièce 1 présentant la même forme de couronne. La troisième pièce 3 présente la même forme de couronne c'est-à-dire d'anneau ou de bague. La liaison entre les deux pièces doit donc être établie le long de toute la circonférence des couronnes 11 et 22, qui est la longueur de la liaison, et avantageusement sur toute leur largeur e perpendiculairement à la direction de l'empilement.

Autrement dit, la liaison 2 devant être établie entre les deux pièces 1, 2 présente la forme d'une boucle fermée. Cette caractéristique permet d'assurer l'étanchéité de la liaison, notamment entre l'intérieur de la boucle (partie de l'empilement entourée par la boucle) et l'extérieur de la boucle (partie entourant la boucle). La boucle fermée est ronde dans la réalisation des figures mais pourrait présenter une autre forme, par exemple une forme polygonale, par exemple carrée ou rectangulaire. Dans la réalisation avec matériau d'apport, la pièce 3 présente avantageusement une forme présentant une section identique à la liaison devant être formée. Il s'agit ici d'un anneau.

Dans ce cas, lors de l'étape de chauffage 40, la source de chaleur balaye la liaison devant être formée, via la première pièce 1, sur plus d'un tour de la liaison en se déplaçant relativement à la liaison dans un seul sens. Le déplacement est réalisé le long de la circonférence de la liaison à former. Autrement dit, le chauffage est réalisé en plus d'une passe, selon un sens de déplacement relatif entre la source de chaleur et la liaison.

Lorsque la source de chaleur est un laser 4, le laser 4 produit un faisceau laser 5 qui irradie la première pièce 1 au droit de la liaison devant être formée, de préférence, sur toute la largeur de la liaison devant être formée par un mouvement relatif entre la source de chaleur et les pièces empilées de façon que la source de chaleur effectue dans un seul sens, plus d'un tour de la liaison. Dans ce cas, le faisceau présente une section sensiblement linéaire orienté linéairement selon la largeur de la liaison (correspondant ici à la largeur e de la couronne 22).

Lorsqu'on utilise un matériau d'apport, la source de chaleur effectue plus d'un tour du matériau d'apport.

Le fait de faire plus d'un tour de la liaison à réaliser permet d'éviter des problèmes d'étanchéité de la liaison qui pourraient se produire si le faisceau effectuait exactement un tour de la pièce au niveau du point de départ et d'arrivée du fait d'une fusion inhomogène du matériau d'apport.

Conformément à l'invention, le procédé comprend, préalablement à l'étape de chauffage 40, une étape de préchauffage 30 des pièces empilées au moyen de la source de chaleur 4 de façon à porter les pièces empilées à des températures inférieures à leurs températures de fusion respectives. Dans cette étape, comme dans l'étape de chauffage, la chaleur produite par une source de chaleur 4 est transmise à la deuxième pièce 2 à travers la première pièce 1. Autrement dit, la source de chaleur chauffe la première pièce uniquement et la chaleur produite est transmise aux autres pièces. Conformément à l'invention, la même source de chaleur est utilisée pour l'étape de préchauffage 30 et pour l'étape de chauffage 40. Si la source de chaleur est un laser, le laser irradie uniquement la première pièce.

Cette étape permet de thermaliser l'empilement avant l'étape de thermo-soudage (ou de chauffage 40) et d'améliorer le rendement thermique du procédé c'est-à-dire l'absorption de la chaleur par les matériaux. Par ailleurs, le fait que cette étape soit réalisée au moyen de la source de chaleur utilisée pour l'étape de chauffage permet d'éviter l'utilisation de dispositifs supplémentaires et notamment d'outillages métalliques qui seraient à l'origine de ponts thermiques.

Avantageusement, l'étape de préchauffage 30 est réalisée en plusieurs passes successives destinées à porter les pièces empilées à des températures successives respectives de plus en plus élevées. Autrement dit, on porte la face irradiée de la première pièce 1 à des paliers de températures successifs de plus en plus élevés choisis de façon à ne pas atteindre les températures de fusion des différentes pièces. Chaque passe correspond à la réalisation par la source de chaleur, d'un tour de la liaison devant être réalisée, le faisceau irradiant, de préférence, la première pièce sur toute la largeur de la liaison devant être réalisée au droit de cette dernière. Cette étape permet d'améliorer l'absorption de la chaleur par l'empilement et la transparence de la première pièce 1 car elle noircit. Le rendement thermique du procédé est donc meilleur que si on procédait en une seule passe. Cette étape permet également de rendre le procédé répétable, la qualité des liaisons obtenues étant homogène.

Avantageusement, le chauffage est asservi à la température de la surface irradiée de la première pièce de façon que la température de la surface irradiée atteigne des paliers successifs de plus en plus élevés. Cette température est mesurée au moyen d'un pyromètre. Le chauffage peut aussi être asservi à la puissance du laser.

Avantageusement, la compression de l'empilement et/ou l'inertage sont réalisés tout au long de l'étape de préchauffage 30.

Avantageusement, la passe effectuée lors de l'étape de chauffage est effectuée plus lentement les passes effectuées lors de l'étape de préchauffage ou avec une vitesse de balayage égale à la vitesse de balayage la plus lente utilisée pour les passes effectuées lors de l'étape de préchauffage. Cela permet d'aller plus lentement permet une meilleure mouillabilité de la première pièce, une meilleure fusion de la troisième pièce et de limiter les contraintes thermiques de la troisième pièce lors de son refroidissement mais aussi de diminuer de façon significative la puissance laser à appliquer sur la première pièce.

Avantageusement, la source de chaleur 4 est fixe et l'empilement se déplace par rapport à la source de chaleur pour réaliser les passes. Ce mode de réalisation présente l'avantage d'être plus simple à mettre en oeuvre qu'un procédé dans lequel la source se déplacerait par rapport à l'empilement surtout dans le cas où la liaison à établir présente une forme de boucle.

Sur la réalisation des figures, la liaison à établir présente une forme circulaire. Le laser 4 est fixe et l'empilement pivote autour d'un axe qui est l'axe de symétrie de la liaison devant être établie. A cet effet, l'empilement est installé sur un plateau 12 apte à pivoter autour d'un axe X.

L'étape de préchauffage comprend, par exemple, quatre étapes élémentaires de préchauffage successives réalisées par une rotation relative de la source de chaleur et des pièces empilées à des vitesses de rotation relatives respectives entre la source et les pièces empilées autour de l'axe X égales par exemple à 10°/s, 8°/s, 6°/s et 4°/s (par °/s on entend des degrés par seconde) dans un sens à puissance laser constante et en réalisant l'étape de chauffage avec une vitesse de rotation relative une vitesse identique à la dernière étape élémentaire de préchauffage, c'est-à-dire ici à 4°/s, avec une régulation de la puissance laser de façon à réaliser la liaison entre les pièces 1 et 2, par exemple, en fonction de la température lue en surface de la pièce 1. Durant chaque étape élémentaire de préchauffage et durant l'étape de chauffage, la source réalise un tour de la liaison à réaliser plus une portion de 10° du tour de la liaison à réaliser. Autrement dit, avantageusement, l'étape de préchauffage comprend plusieurs étapes de préchauffage successives. Lors de chaque étape de préchauffage élémentaire, on réalise plus d'une passe, et de préférence, une passe plus une portion de passe, dans un seul sens. On réalise également plus d'une passe, de préférence une passe plus une portion de passe, dans un seul sens, lors de l'étape de chauffage.

Avantageusement, le faisceau laser 5 est incliné d'un angle compris entre 5° et 15 ° et de préférence égal à 10° par rapport à la normale à la surface de la première pièce 1 qui lui fait face. Cette caractéristique permet d'améliorer l'absorption de la chaleur produite par le faisceau laser par la première pièce 1.

La demanderesse a réalisé un empilement à base d'aluminium, d'Inox et d'une troisième pièce sous forme d'anneau plan réalisée en alliage aluminium, silicium (composition en masse de Si entre 11 et 13%) en amenant la face irradiées à des températures successives de 400°C, 500°C et 700°C lors de l'étape de préchauffage et à une température de 800°C lors de l'étape de chauffage pendant sur un tour et 10° de recouvrement. Elle a obtenu un assemblage présentant une tenue au vide inférieure ou égale à 1.10⁻¹⁰mbar, un taux de fuite inférieur ou égal à 1.10⁻¹⁰ mbar.l/s. et une tenue à l'arrachement comprise entre 3500 daN et 5000 daN à la température ambiante.

L'utilisation d'un laser est avantageuse car il s'agit d'une source ponctuelle d'énergie thermique qui limite la déformation des pièces chauffées et évite une étape de rectification de la forme des assemblages obtenus.

## Revendications

1. Procédé d'établissement d'une liaison (L) permanente entre une première pièce (1) en alliage ferreux et une deuxième pièce (2) en aluminium ou en alliage d'aluminium, comprenant :
• une étape d'empilement (20) d'une pluralité de pièces comprenant la première pièce (1) et la deuxième pièce (2),
• une étape de chauffage (40) dans laquelle la chaleur produite par une source de chaleur (4) est transmise à la deuxième pièce (2) à travers la première pièce (1), l'étape de chauffage (40) étant réalisée de façon à provoquer l'établissement de la liaison entre la première pièce (1) et la deuxième pièce (2) par fusion d'au moins une des pièces empilées, characterisé en ce que ledit procédé comprend préalablement à l'étape de chauffage (40), une étape de préchauffage (30) consistant à préchauffer les pièces empilées au moyen de la source de chaleur (4) de façon à porter les pièces empilées à des températures respectives inférieures à leurs températures de fusion respectives, la même source de chaleur (4) étant utilisée pour l'étape de préchauffage (30) et pour l'étape de chauffage (40).

2. Procédé selon la revendication précédente, dans lequel lors de l'étape d'empilement (20), une troisième pièce (3) en matériau d'apport, destinée à établir la liaison entre la première pièce et la deuxième pièce, est interposée entre la première pièce (1) et la deuxième pièce (2), et lors de l'étape de chauffage (40), la chaleur produite par la source de chaleur (4) est transmise à la deuxième pièce (2) et à la troisième pièce (3) à travers la première pièce (1), la troisième pièce étant choisie et l'étape de chauffage étant réalisée de façon à établir la liaison par soudo-brasage.

3. Procédé selon l'une quelconque des revendications 1 à 2, dans lequel les pièces empilées sont maintenues en contact pendant l'étape de chauffage (40).

4. Procédé selon la revendication 3, dans lequel les pièces empilées sont maintenues en contact sur toute la longueur et/ou sur toute la largeur de la liaison devant être établie pendant l'étape de chauffage.

5. Procédé selon l'une quelconque des revendications précédentes, dans lequel un isolant thermique (7) est maintenu en contact avec au moins une pièce prise parmi la première pièce et la deuxième pièce, pendant l'étape de chauffage.

6. Procédé d'assemblage selon la revendication 5, dans lequel l'isolant thermique (7) est interposé entre les pièces empilées et un outillage (6) maintenant les pièces empilées (1, 2, 3) en contact de façon à limiter la transmission de la chaleur des pièces empilées vers l'outillage (6).

7. Procédé selon l'une quelconque des revendications 5 à 6, dans lequel l'isolant thermique est réalisé en silicate de zirconium.

8. Procédé selon l'une quelconque des revendications précédentes, dans lequel la source de chaleur (4) balaye plus lentement la liaison à réaliser pendant l'étape de chauffage (40) que pendant l'étape de préchauffage (30) ou balaye la liaison avec une vitesse de balayage égale à la vitesse de balayage la plus lente utilisée pendant l'étape de préchauffage (30).

9. Procédé selon l'une quelconque des revendications précédentes, dans lequel la source de chaleur (4) est un laser.

10. Procédé selon l'une quelconque des revendications précédentes, dans lequel la liaison présente la forme d'une boucle fermée.

11. Procédé selon la revendication précédente, dans lequel lors de l'étape de chauffage (40), la source de chaleur balaye la liaison devant être formée sur plus d'un tour de la liaison en se déplaçant relativement à la liaison dans un seul sens.

12. Procédé selon la revendication 10, dans lequel l'étape de préchauffage est réalisée en plusieurs passes successives destinées à porter les pièces empilées à des températures successives respectives de plus en plus élevées, chaque passe correspondant à la réalisation, par la source de chaleur, d'un tour de la liaison devant être réalisée, le faisceau irradiant la première pièce sur toute la largeur de la liaison devant être réalisée au droit de cette dernière.

## Patentansprüche

1. Verfahren zum Herstellen einer permanenten Verbindung (L) zwischen einem ersten Teil (1) aus einer Eisenlegierung und einem zweiten Teil (2) aus Aluminium oder einer Aluminiumlegierung, das Folgendes umfasst:
• einen Schritt (20) des Stapelns von mehreren Teilen, die das erste Teil (1) und das zweite Teil (2) umfassen,
• einen Erhitzungsschritt (40), in dem die von einer Wärmequelle (4) produzierte Wärme über das erste Teil (1) zu dem zweiten Teil (2) übertragen wird, wobei der Erhitzungsschritt (40) so realisiert wird, dass die Herstellung der Verbindung zwischen dem ersten Teil (1) und dem zweiten Teil (2) durch Fusion von mindestens einem der gestapelten Teile hervorgerufen wird, **dadurch gekennzeichnet, dass**
das Verfahren vor dem Erhitzungsschritt (40) einen Vorerhitzungsschritt (30) umfasst, der darin besteht, die gestapelten Teile mittels der Wärmequelle (4) zu erhitzen, um die gestapelten Teile auf Temperaturen zu erhitzen, die jeweils geringer sind als ihre jeweiligen Fusionstemperaturen, wobei dieselbe Wärmequelle (4) für den Vorerhitzungsschritt (30) und für den Erhitzungsschritt (40) benutzt wird.

2. Verfahren nach dem vorherigen Anspruch, wobei während des Stapelungsschrittes (20) ein drittes Teil (3) aus Schweißmaterial, zum Herstellen der Verbindung zwischen dem ersten Teil und dem zweiten Teil, zwischen dem ersten Teil (1) und dem zweiten Teil (2) eingefügt wird, und während des Erhitzungsschritts (40) die von der Wärmequelle (4) erzeugte Hitze über das erste Teil (1) auf das zweite Teil (2) und das dritte Teil (3) übertragen wird, wobei das dritte Teil so gewählt und der Erhitzungsschritt so durchgeführt wird, dass die Verbindung durch Löten hergestellt wird.

3. Verfahren nach einem der Ansprüche 1 bis 2, wobei die gestapelten Teile während des Erhitzungsschrittes (40) in Kontakt miteinander gehalten werden.

4. Verfahren nach Anspruch 3, wobei die gestapelten Teile über die gesamte Länge und/oder über die gesamte Breite der Verbindung in Kontakt gehalten werden, die während des Erhitzungsschrittes hergestellt werden soll.

5. Verfahren nach einem der vorherigen Ansprüche, wobei ein thermisches Isoliermittel (7) während des Erhitzungsschrittes in Kontakt mit mindestens einem Teil ausgewählt aus dem ersten Teil und dem zweiten Teil gehalten wird.

6. Fügungsverfahren nach Anspruch 5, wobei das thermische Isoliermittel (7) zwischen die gestapelten Teile und ein Werkzeug (6) eingefügt wird, das die gestapelten Teile (1, 2, 3) in Kontakt hält, um die Übertragung der Wärme der gestapelten Teile auf das Werkzeug (6) zu begrenzen.

7. Verfahren nach einem der Ansprüche 5 bis 6, wobei das thermische Isoliermittel aus Zirkoniumsilikat hergestellt wird.

8. Verfahren nach einem der vorherigen Ansprüche, wobei die Wärmequelle (4) die zu realisierende Verbindung während des Erhitzungsschrittes (40) langsamer abtastet als während des Vorerhitzungsschrittes (30) oder die Verbindung mit einer Abtastgeschwindigkeit abtastet, die gleich der langsamsten Abtastgeschwindigkeit ist, die während des Vorerhitzungsschrittes (30) angewendet wird.

9. Verfahren nach einem der vorherigen Ansprüche, wobei die Wärmequelle (4) ein Laser ist.

10. Verfahren nach einem der vorherigen Ansprüche, wobei die Verbindung in Form eines geschlossenen Kreislaufs vorliegt.

11. Verfahren nach einem vorherigen Anspruch, wobei während des Erhitzungsschrittes (40) die Wärmequelle die herzustellende Verbindung über mehr als einen Umlauf um die Verbindung durch Bewegen relativ zu der Verbindung in einer einzigen Richtung abtastet.

12. Verfahren nach Anspruch 10, wobei der Vorerhitzungsschritt in mehreren aufeinander folgenden Durchgängen realisiert wird, um die gestapelten Teile nacheinander jeweils auf immer höhere Temperaturen zu bringen, wobei jeder Durchgang der Realisierung, durch die Wärmequelle, eines Umlaufs um die zu realisierende Verbindung entspricht, wobei der Strahl das erste Teil über die Breite der zu realisierenden Verbindung in Linie mit dieser Letzteren bestrahlt.

## Claims

1. A method for establishing a permanent bond (L) between a first part (1) made of a ferrous alloy and a second part (2) made of aluminium or of an aluminium alloy, comprising:
• a step of stacking (20) a plurality of parts comprising the first part (1) and the second part (2),
• a heating step (40) in which the heat produced by a heat source (4) is transmitted to the second part (2) through the first part (1), the heating step (40) being carried out so as to cause the bond to be established between the first part (1) and the second part (2) by melting at least one of the stacked parts, **characterised in that**
said method comprises, prior to the heating step (40), a pre-heating step (30) consisting of pre-heating the stacked parts by means of the heat source (4) so as to bring the stacked parts to respective temperatures below their respective melting temperatures, the same heat source (4) being used for the pre-heating step (30) and for the heating step (40).

2. The method according to the preceding claim, wherein, during the stacking step (20), a third part (3) made of a filler material and intended to establish the bond between the first part and the second part, is interposed between the first part (1) and the second part (2), and during the heating step (40), the heat produced by the heat source (4) is transmitted to the second part (2) and to the third part (3) through the first part (1), the third part being chosen and the heating step being carried out so as to establish the bond by braze-welding.

3. The method according to according to any of Claims 1 or 2, wherein the stacked parts are held in contact during the heating step (40).

4. The method according to Claim 3, wherein the stacked pieces are held in contact over the entire length and/or over the entire width of the bond that has to be established during the heating step.

5. The method according to any of the preceding claims, wherein a thermal insulator (7) is held in contact with at least one part taken from the first part and the second part during the heating step.

6. The joining method according to Claim 5, wherein the thermal insulator (7) is interposed between the stacked parts and a tool (6) holding the stacked parts (1, 2, 3) in contact so as to limit the transmission of heat from the stacked parts to the tool (6).

7. The method according to any of Claims 5 or 6, wherein the thermal insulator is made of zirconium silicate.

8. The method according to any of the preceding claims, wherein the heat source (4) scans more slowly the bond to be produced during the heating step (40) than during the pre-heating step (30) or scans the bond with a scanning speed equal to the slowest scanning speed used during the pre-heating step (30).

9. The method according to any of the preceding claims, wherein the heat source (4) is a laser.

10. The method according to any of the preceding claims, wherein the bond is in the form of a closed loop.

11. The method according to the preceding claim, wherein during the heating step (40) the heat source scans the bond that has to be formed over more than one circuit of the bond while moving relative to the bond in a single direction.

12. The method according to Claim 10, wherein the pre-heating step is carried out in a number of successive passes intended to bring the stacked parts to respective successive temperatures, each of which is higher than the last, each pass corresponding to the completion, by the heat source, of one circuit of the bond that has to be produced, the beam irradiating the first part over the entire width of the bond that has to be produced in line with the latter.
